Europäisches Patentamt

European Patent Office

Office européen des brevets

(11) Publication number: **0 258 524 B1**

# EUROPEAN PATENT SPECIFICATION

(45) Date of publication of patent specification: **07.08.91**  (51) Int. Cl.⁵: **F16L  33/20**

(21) Application number: **87103944.2**

(22) Date of filing: **18.03.87**

(54) Hose connection suitable for use with high pressure fluids.

(30) Priority: **25.07.86 IT 2125786**

(43) Date of publication of application:
**09.03.88 Bulletin  88/10**

(45) Publication of the grant of the patent:
**07.08.91 Bulletin  91/32**

(84) Designated Contracting States:
**AT BE CH DE ES FR GB GR IT LI LU NL SE**

(56) References cited:
**EP-A- 0 184 641**
**DE-A- 2 907 813**
**DE-B- 2 331 977**
**FR-A- 1 323 740**
**US-A- 4 305 608**

(73) Proprietor: **ALLEGRI CESARE S.p.A.**
**via Venezia 6**
**I-20099 Sesto San Giovanni (MI)(IT)**

(72) Inventor: **Allegri, Cesare**
**via della Torre 15**
**I-20127 Milano(IT)**

(74) Representative: **Gervasi, Gemma, Dr. et al**
**Studio Brevetti e Marchi NOTARBARTOLO &**
**GERVASI 33, Viale Bianca Maria**
**I-20122 Milano(IT)**

## Description

This invention relates to a new type of hose connection suitable for use with high pressure fluids.

More particularly, the invention relates to a hose connection formed from a metal coupling and an outer metal sleeve which tightens the hose against said metal coupling, these elements having geometrical characteristics such as to form a system able to resist very high pressure.

Hose connections for high pressure use are known in the art, in which the hose is fixed to the metal coupling by a cylindrical metal sleeve surrounding the end of the hose.

We have now found that the connection according to the present invention, which solves high-pressure sealing problems in particularly demanding devices, performs significantly better than connections of the known art.

By virtue of its performance, the connection according to the present invention is particularly suitable for hydraulic braking systems of competition and off-the-road motorcycles and motor vehicles, in addition to chemical and pharmaceutical equipment operating under particularly severe conditions, and generally for all equipment operating under high pressure.

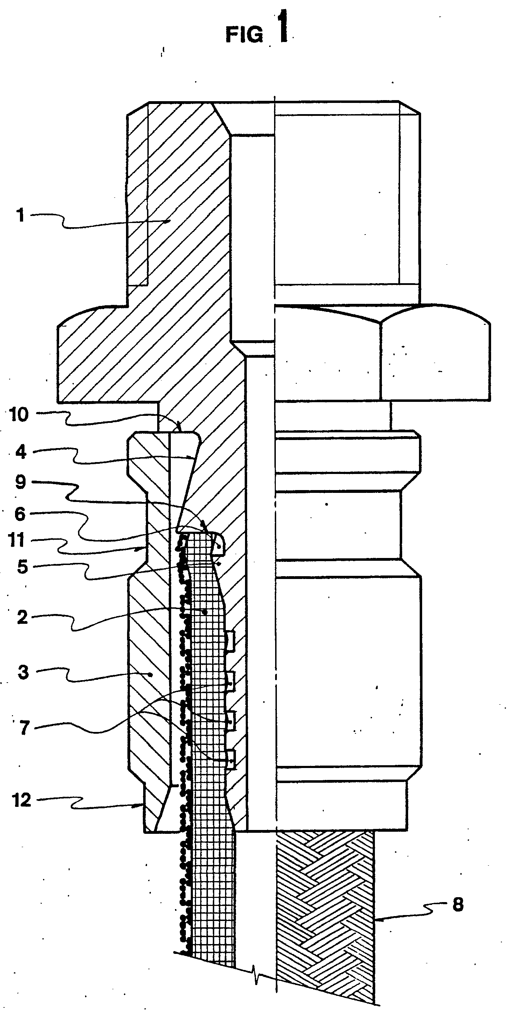

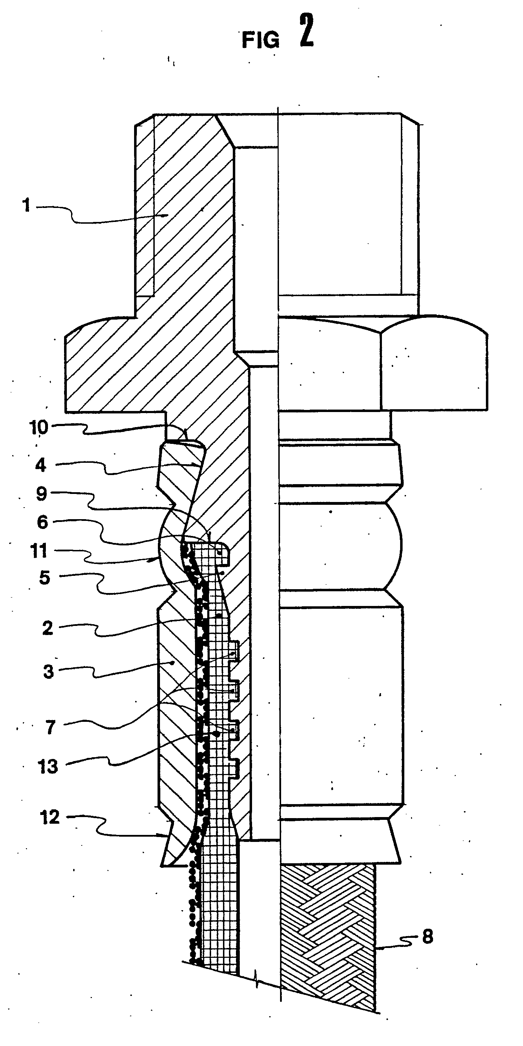

The connection according to the present invention consists of elements which, as stated heretofore and as shown in Figures 1 and 2, are: a metal coupling and an outer metal sleeve, between which an end of a hose is clamped, wherein, starting from the head of the coupling, said metal coupling comprises a first abutment shoulder for the sleeve, a conical seat having its minor diameter towards the coupling head, a sharp-edged conical projection having an opposite taper to said conical seat such that between said conical seat and said conical projection there is formed a second abutment shoulder for the hose and an undercut into which the end of the hose becomes wedged, and circumferential grooves, said sleeve having an initial shape in which its inner surface is cylindrical and its outer surface comprises profiled portions, by virtue of which when the sleeve is pressed against the coupling-hose system it deforms to tightly clamp itself and the hose against the coupling.

These and further characteristics of the hose connection according to the present invention will be more apparent from the detailed description given hereinafter with reference to the relative figures which show a preferred embodiment of the invention by way of non-limiting example.

Said figures show the formation of the connection according to the invention using a plastics hose 2 provided with a sheath of metal wire braid 8 which gives the hose high pressure resistance and the ability to bend without the danger of flattening.

Said metal sheath does not form an essential part of the invention, however it is of considerable use in the construction of the high pressure hoses considered in the present invention.

Figure 1 shows one end of the hose 2 mounted on the coupling 1 and surrounded by the cylindrical sleeve 3 ready for pressing against the hose-coupling system.

Figure 2 shows the same end with the coupling 1 securely fixed to the hose 2 by the effect of the pressing action exerted on the cylindrical sleeve 3.

The method used for assembling the hose connection and for pressing the sleeve 3 is as follows: with reference to Figure 1, the sleeve 3 is mounted over the previously orthogonally-trimmed end of the hose 2, and is free to move along the braid 8 as its inner diameter is greater than the outer diameter of the hose 2.

The shank of the coupling 1 is then inserted into the hose 2 until the orthogonally-trimmed end of said hose abuts against the shoulder 9 of said coupling. The insertion of the shank is facilitated by its shaping with grooves 7 formed along the circumference and having a rectangular profile.

At this point, the sleeve 3 is slid along the braid 8 until its base rests against the shoulder 10 of the coupling 1.

The system prepared in this manner is then inserted into a suitable tool comprising a number of radial punches which are disposed symmetrically about the sleeve 3 and are advanced with concentric self-centering movement along the sleeve.

Said punches exert a very high pressure on the sleeve 3 to subject it to plastic deformation, so reducing its diameter and slightly lengthening it in the longitudinal direction as shown in Figure 2.

This cold deformation of the sleeve 3 results in permanent and perfect assembly of the coupling 1 on the hose 2.

The originality of the invention and the technical progress attained from the point of view of resistance to very high pressure and the formation of a perfect connection seal are due to the shape of the coupling 1 and sleeve 3 and to their combination and mutual interaction.

It is pointed out that according to the prior art device disclosed by German Patent 2.331.977 the sleeve has a shaped inner surface, i.e. being not perfectly cylindrical, which involves the necessity of machining this inner surface.

The device disclosed by French Patent 1.323.740 is realized by using a sleeve having perfectly cylindrical inner and outer surfaces and an uniform wall thickness. This involves the possibility of only a moderate shaping of the sleeve during the pressing operation. In this connection it is observed that in the device according to the present invention, as it results from figures 1 and 2, the inner surface of the sleeve 3 of figure 1, i.e. before pressing, is perfectly cylindrical whereas after pressing it assumes the form shown in figure 2 by virtue of the particular profiled portions 11 and 12 existing previously in its outer surface.

By the effect of the pressing operation, the inner surface in correspondence with the profiled portion 11 curves to adhere exactly to the conical seat 4, whereas the orthogonally-trimmed end of the hose 2 is compressed into the undercut 6 to create an exceptionally effective seal against the sharp edge of the conical projection 5.

Furthermore, the hose 2 undergoes considerable compression in the region 13 to form an excellent hydraulic seal by being pressed against the grooves 7, whereas at its orthogonally-trimmed end it expands diametrically and becomes wedged into the undercut 6 to offer maximum guarantee against withdrawal under pressure.

In its turn, the conical seat 4 permanently fixes the coupling 1 to the sleeve 3 to prevent its withdrawal and to form a structural assembly with the two components which is very secure and compact.

The combination of these effects therefore gives the connection according to the invention maximum guarantee of high-pressure sealing and of resistance to withdrawal of the coupling from the hose.

Moreover because of the particular shape of the sleeve 3, its deformation during the pressing operation gives the connection according to the invention not only the stated advantageous functional characteristics but also a pleasant appearance.

The present invention is applicable to hoses constructed of flexible material susceptible to cold plastic formation in order to be able to form the hermetic seal.

Suitable hose materials include olefinic polymers (polyethylene and polypropylene), polyamides and polyvinylchloride. Polytetrafluoroethylene is particularly advantageous because of its high resistance to chemical agents and to high temperature.

The connection according to the invention is particularly suitable and advantageous when applied to polytetrafluoroethylene hoses of small inner diameter ranging from 3.4 mm to 29 mm, and having an internal smooth wall.

There is thus the advantage of being able to form extremely reliable connection for small-diameter hoses of smooth inner wall which have no corrugated inner wall equivalent.

The coupling 1 is preferably constructed of tropicalized brass, however in those applications in which it can come into contact with corrosive fluids it is constructed of AISI 303/304 stainless steel, titanium or hastalloy.

The sleeve 3 is generally constructed of the same material as the coupling 1, however different combinations are possible.

As already stated, the connections according to the present invention find application in numerous industrial fields, in plants and devices using high pressure fluids. For example, the said connections can be very favourably applied to hydraulic braking systems on competition and off-the-road motorcycles and motor vehicles, with considerable advantage over current rubber hoses which have the drawback of unreliable control transmission and possible alteration.

Besides obviating these drawbacks, the connection according to the invention results in a system of improved appearance by enabling a hose of smaller outer diameter to be used.

With regard to this application, DOT SAE J1401 standards state that the hose in hydraulic braking systems must withstand a pressure of 60 MPa (600 atmospheres), whereas a polytetrafluoroethylene hose with a steel braid covering and a connection according to the invention withstands a pressure of 105 MPa (1050 atmospheres) for an inner diameter of 3.4 mm.

## Claims

1. A hose connection suitable for use with high pressure fluids and consisting of a metal coupling (1) and an outer metal sleeve (3), between which an end of a hose (2) is clamped, wherein, starting from the head of the coupling, said metal coupling (1) comprises a first abutment shoulder (10) for the sleeve, a conical seat (4) having its minor diameter towards the coupling head, a sharp-edged conical projection (5) having an opposite taper to said conical seat (4) such that between said conical seat and said conical projection there is formed a second abutment shoulder (9) for the hose and an undercut (6) into which the end of the hose (2) becomes wedged, and circumferential grooves (7), said sleeve (3) having an initial shape in which its inner surface is cylindrical and its outer surface comprises profiled portions (11, 12), by virtue of which when the sleeve is pressed against the coupling-hose system it deforms to tightly clamp itself and the hose against the coupling.

2. A connection as claimed in claim 1, characterised in that the shank of said coupling (1) is inserted into said hose (2) until the orthogonally-trimmed end thereof abuts against the shoulder (9) of said coupling.

3. A connection as claimed in claim 1, characterised in that said sleeve (3) is rested with its base against the shoulder (10) of said coupling (1).

4. A connection as claimed in claim 1, characterised in that said circumferential grooves (7) have a retangular profile.

5. A connection as claimed in claim 2, characterised in that on undergoing pressing, said sleeve (3) bends in correspondence with the respective one (11) of said profiled portions to adhere exactly to the conical seat (4), the orthogonally-trimmed end of the hose (2) being compressed into said undercut (6).

6. A connection as claimed in claim 1, characterised in that on undergoing pressing, said sleeve (3) strongly compressed said hose (2) in a sealing region (13) to result in an excellent hydraulic seal against the grooves (7).

7. A connection as claimed in claim 1, characterised in that said hose is constructed of material susceptible to cold plastic deformation such as polyethylene, polypropylene, polyvinylchloride and polytetrafluoroethylene.

8. A connection as claimed in claim 1, characterised in that said metal coupling and said metal sleeve are constructed of tropicalized brass, or of AISI 303/304 stainless steel, or of titanium, or of hastalloy.

9. A connection as claimed in claim 1, characterised in that the inner diameter of said hose ranges from 3.4 mm to 29 mm.

10. A connection as claimed in claim 1, characterised in that said hose has a smooth inner wall.

11. A connection as claimed in claim 1, comprising a polytetrafluoroethylene hose of 3.4 mm inner diameter, covered with a sheath of braided metal wire, and withstanding pressures of up to 105 M Pa.

**Revendications**

1. Raccord de tuyau destiné à l'emploi avec des fluides sous haute pression et constitué d'une pièce d'accouplement en métal (1) et d'un manchon métallique externe (3), entre lesquels une extrémité de tuyau (2) est serrée, dans lequel, en partant de la tête de la pièce d'accouplement, ladite pièce d'accouplement en métal (1) comprend un premier épaulement (10) formant butée pour le manchon, une embase conique (4) dont le diamètre le plus petit est du côté de la tête d'accouplement, une saillie conique à arêtes vives (5) présentant une partie conique renversée en regard de l'embase conique (4), de telle sorte qu'entre ladite embase conique et ladite saillie conique se trouve constitué un second épaulement (9) formant butée pour le tuyau et une saignée (6) dans laquelle l'extrémité du tuyau (2) vient se caler, et des rainures circonférentielles (7), ledit manchon (3) présentant une forme initiale suivant laquelle sa face interne est cylindrique et sa face externe se compose de parties profilées (11, 12), grâce auxquelles quand on presse le manchon contre le système constitué par le tuyau et la pièce d'accouplement, il se déforme pour venir se serrer étroitement ainsi que le tuyau contre la pièce d'accouplement.

2. Raccord selon la revendication 1, caractérisé en ce que la tige de ladite pièce d'accouplement (1) est insérée dans le tuyau (2) jusqu'à ce que la section droite de son extrêmité vienne buter contre l'épaulement (9) de la pièce d'accouplement.

3. Raccord selon la revendication 1, caractérisé en ce que le manchon (3) prend appui par sa base contre l'épaulement (10) de ladite pièce d'accouplement (1).

4. Raccord selon la revendication 1, caractérisé en ce que lesdites rainures circonférentielles (7) ont un profil rectangulaire.

5. Raccord selon la revendication 2, caractérisé en ce que sous l'effet d'une compression, ledit manchon (3) se cintre au niveau de la partie profilée correspondante (11) pour adhérer exactement à l'embase conique (4), la section droite de l'extrémité du tuyau (2) étant comprimée dans la saignée (6).

6. Raccord selon la revendication 1, caractérisé en ce que sous l'effet d'une pression, ledit manchon (3) comprime fortement le tuyau (2) dans une zone d'étanchéité (13) avec pour conséquence une excellente étanchéité hydraulique au niveau des rainures (7).

7. Raccord selon la revendication 1, caractérisé en ce que le tuyau est fait en une matière susceptible de déformation plastique à froid, telle que le polyéthylène, le polypropylène, le chlorure de polyvinyle et le polytétrafluoroéthylène.

8. Raccord selon la revendication 1, caractérisé en ce que la pièce d'accouplement en métal et le manchon métallique sont faits en laiton tropicalisé, ou en acier inoxydable AISI 303/304, ou en titane ou en alliage résistant aux acides tel que l'HASTALLOY.

9. Raccord selon la revendication 1, caractérisé en ce que le diamètre interne du tuyau se situe entre 3,4 mm et 29 mm.

10. Raccord selon la revendication 1, caractérisé en ce que le tuyau présente une paroi interne lisse.

11. Raccord selon la revendication 1, composé d'un tuyau en polytétrafluoroéthylène de 3,4 mm de diamètre interne, recouvert d'un fourreau de fils métalliques tressés et susceptible de résister à des pressions pouvant aller jusqu'à 105 MPa.

## Patentansprüche

1. Schlauchverbindung, die zur Verwendung bei Hochdruckfluiden geeignet ist und aus einer Metallkupplung (1) sowie einer äußeren Metallhülse (3) besteht, zwischen welchen Teilen ein Ende eines Schlauches (2) festgeklemmt wird, wobei, beginnend am Kopf der Kupplung, die Metallkupplung (1) eine erste Anschlagschulter (10) für die Hülse, einen konischen Sitz (4), dessen kleinerer Durchmesser zum Kupplungskopf hin vorliegt, einen scharfkantigen konischen Vorsprung (5) mit einer zum konischen Sitz (4) entgegengesetzten Verjüngung, so daß zwischen dem konischen Sitz und dem konischen Vorsprung eine zweite Anschlagschulter (9) für den Schlauch und ein Unterschnitt (6) gebildet ist, in den das Ende des Schlauches (2) eingekeilt wird, und Umfangsnuten (7) aufweist, wobei die Hülse (3) eine Ausgangsform hat, bei der ihre Innenfläche zylindrisch ist und ihre Außenfläche Profilteile (11, 12) aufweist, aufgrund derer sie sich während des Pressens gegen das Kupplungs/Schlauch-System verformt, um sich selbst und den Schlauch dicht an der Kupplung festzuklemmen.

2. Verbindung nach Anspruch 1, dadurch gekennzeichnet, daß der Schaft der Kupplung (1) in den Schlauch (2) eingeführt wird, bis das orthogonal zugerichtete Ende hievon an der Schulter (9) der Kupplung anstößt.

3. Verbindung nach Anspruch 1, dadurch gekennzeichnet, daß die Hülse (3) mit ihrer Basis an der Schulter (10) der Kupplung (1) sitzt.

4. Verbindung nach Anspruch 1, dadurch gekennzeichnet, daß die Umfangsnuten (7) ein rechteckiges Profil aufweisen.

5. Verbindung nach Anspruch 1, dadurch gekennzeichnet, daß sich die Hülse (3), wenn sie dem Pressen unterzogen wird, entsprechend dem einen (11) der Profilteile biegt, um exakt an dem konischen Sitz (4) anzuhaften, wobei das orthogonal zugerichtete Ende des Schlauches (2) in den Unterschnitt (6) zusammengepreßt wird.

6. Verbindung nach Anspruch 1, dadurch gekennzeichnet, daß die Hülse (3), wenn sie dem Pressen unterzogen wird, den Schlauch (2) in einem Dichtungsbereich (13) stark zusammendrückt, um eine hervorragende hydraulische Dichtung gegen die Nuten (7) zu ergeben.

7. Verbindung nach Anspruch 1, dadurch gekennzeichnet, daß der Schlauch aus einem kaltplastisch verformbaren Material, wie Polyäthylen, Polypropylen, Polyvinylchlorid und Polytetrafluoräthylen, hergestellt ist.

8. Verbindung nach Anspruch 1, dadurch gekennzeichnet, daß die Metallkupplung und die Metallhülse aus witterungsbeständigem Messing, aus rostfreiem AISI 303/304-Stahl, aus Titan oder aus Hastalloy besteht.

9. Verbindung nach Anspruch 1, dadurch gekennzeichnet, daß der Innendurchmesser des Schlauches im Bereich von 3,4 mm bis 29 mm liegt.

10. Verbindung nach Anspruch 1, dadurch gekennzeichnet, daß der Schlauch eine glatte Innenwand aufweist.

11. Verbindung nach Anspruch 1, mit einem aus Polytetrafluoräthylen bestehenden Schlauch mit einem Innendurchmesser von 3,4 mm, der von einer Hülle aus geflochtenem Metalldraht bedeckt ist und Drücken bis 105 MPa widersteht.

## FIG 1

FIG **2**